# EUROPÄISCHE PATENTANMELDUNG

(11) **EP 0 991 225 A2**
(43) Veröffentlichungstag der Anmeldung: **05.04.2000**
(21) Anmeldenummer: 99440258.4
(22) Anmeldetag: 24.09.1999
(51) Int. Cl.: H04L 12/12

(54) **Verfahren, Server und Endgerät zur Modifikation von in einem Server gespeicherten Dienstleistungs-Daten**

(30) Priorität: 01.10.1998 DE 19845272
(71) Anmelder: ALCATEL, 75008 Paris (FR)
(72) Erfinder: Siegmund, Gerd, 70435 Stuttgart (DE)
(74) Vertreter: Brose, Gerhard, Dipl.-Ing.

(57) **Zusammenfassung**

Die vorliegende Erfindung betrifft ein Verfahren zur Modifikation von in einem Server gespeicherten Dienstleistungs-Daten, sowie einen Server(CS) und ein Endgerät (TER) hierfür. Mit den in dem Server gespeicherten Dienstleistungs-Daten kann der Server (CS) Dienstleistungsfunktionen für ein Telekommunikations-Endgerät eines Teilnehmers über einen Dienstkanal (VL) erbringen. Dabei wird vorgeschlagen, daß ein Datenendgerät (DT) eine Datenverbindung (CON) zu dem Server (CS) aufbaut und daß das Datenendgerät an den Server einen Zugangswunsch zu den Dienstleistungs-Daten sendet, den der Server empfängt. Anschließend bearbeiten der Server und das Datenendgerät die Daten durch Interaktion, bei der der Server die Daten an das Datenendgerät ausgibt und das Datenendgerät Daten zumindest dann an den Server sendet, wenn an dem Datenendgerät eine Datenänderung vorgegeben wurde. Geänderte Daten speichert der Server. Entweder der Server oder das Datenendgerät beenden die Datenverbindung.

## Beschreibung

Die vorliegende Erfindung betrifft ein Verfahren gemäß dem Oberbegriff des Anspruchs 1, sowie einen Server gemäß dem Oberbegriff des Anspruchs 7 hierfür und ein Endgerät gemäß dem Oberbegriff des Anspruchs 8 hierfür.

Endgeräte für Telekommunikationsnetze, insbesondere Fernsprechapparate, sind mit verschiedenen Funktionen ausgestattet, die die Bedienung der Endgeräte vereinfachen oder erleichtern. Viele dieser Funktionen sind in die Endgeräte fest eingebaut und sofort verfügbar, z.B. eine Wahlwiederholung, mit der eine zuvor getätigte Rufnummernwahl mit einem einzigen Tastendruck auf eine spezielle Wahlwiederholungstaste wiederholt werden kann. Vor der Nutzung anderer Funktionen müssen die Endgeräte jedoch eigens programmiert werden, z.B. muß eine Rufnummernbelegung für eine Kurzwahltaste, mit der eine aus mehreren Ziffern bestehende Rufnummer durch einen einzigen Tastendruck abgerufen werden kann, in ein Endgerät eingegeben und im Endgerät abgespeichert werden.

Umfangreichere und individuell anpassbare Funktionen eines Endgerätes, wie z.B. eine Bedienoberfläche, können mit den Mitteln eines Endgerätes nur schwer eingerichtet werden, da ein Endgerät meist neben einer numerischen Tastatur nur einige Spezialtasten anbietet. Deshalb werden die individuell anpassbaren Funktionen eines Endgerätes oftmals auf einem separaten Datenverarbeitungsgerät konfiguriert, z.B. auf einem Personal Computer, der neben einer umfangreichen Tastatur auch über eine graphische Eingabehilfe, z.B. eine Maus, verfügt. Die konfigurierten Funktionen werden dann von dem Datenverarbeitungsgerät als Softwarepaket über eine Verbindungsleitung auf das Endgerät geladen.

Es gibt jedoch auch Endgeräte, in die Softwarepakete aus einer externen, innerhalb eines Telekommunikationsnetzes angeordneten Quelle geladen werden können. Ein solches System aus Dienstbereitstellungseinrichtung und einem mit Steuerdaten ladbaren Endgerät ist in der Produktlinie ADSI (Analog Display Services Interface) von Alcatel Telecom realisiert. In der Schrift 3CL 00300 0001 TQZZA-Ed. 1-DC/10/96 der Alcatel Telecom wird unter dem Absatz _{"}Alcatel 1461" beschrieben, wie sich ein Bediener mit einem Endgerät, hier einem Alcatel ADSI-Endgerät mit der Bezeichnung _{"}Alcatel 2595", bei der Dienstbereitstellungeinrichtung anmeldet und dort unter vorgefertigten Dienstpaketen auswählt. Diese Dienstpakete sind in einer von dem ADSI-Endgerät auswertbaren Sprache verfaßt und werden von der Dienstbereitstellungeinrichtung auf das ADSI-Endgerät geladen. Das ADSI-Endgerät führt die in den Dienstpaketen enthaltenen Funktionen aus. Für ein komfortables Endgerät typische und persönlich auf einen Benutzer des Endgerätes zugeschnittene Funktionen, wie z.B. ein persönliches Telefonbuch oder eine Anzeige des Anrufernamens bei ankommenden Rufen, müssen auf dem ADSI-Endgerät lokal programmiert werden, weil das ADSI-Endgerät diese Funktionen ohne die Hilfe der Dienstbereitstellungseinrichtung anbieten muß. Dies wird in der Schrift 3CL 00301 0001 TQZZA-Ed. 2-DC/10/96 der Alcatel Telecom, die sich speziell mit dem ADSI-Endgerät _{"}Alcatel 2595" befaßt, unter den Abschnitten ,,Directory" und ,,Caller Identification Management" deutlich. Außerdem kann das Endgerät während der Kommunikation mit der Dienstbereitstellungeinrichtung nicht von weiteren Kommunikationspartnern außer der Dienstbereitstellungeinrichtung erreicht werden. Die Funktionen eines Telefones sind solange mit dem Endgerät nicht ausführbar.

Es gibt jedoch auch Endgeräte, die - auch während einer Nutzverbindung - über eine Datenverbindung in direktem Kontakt mit einem ihnen zugeordneten Server stehen können und gemeinsam mit dem jeweils zugeordneten Server Telekommunikationsdienste erbringen. Der Server kann dabei entweder irgendwo in einem Telekommunikationsnetz positioniert und vorzugsweise über eine virtuelle, paketorientierte Verbindung mit dem Endgerät verbunden sein, oder der Server ist in eine Datenverbindung zwischen dem Endgerät und dem Telekommunikationsnetz, z.B. in eine Verbindung zwischen dem Endgerät und einer das Endgerät bedienenden Ortsvermittlungsstelle geschaltet. Der Server ermittelt z.B. zu einer in einer sogenannten CLI-Nachricht (Calling Line Identification) übertragenen Rufnummer eines Anrufers dessen Namen und übermittelt diesen Namen dann dem Endgerät zur dortigen Anzeige. In dem Server kann aber auch ein kundenspezifisches Telefonbuch abgelegt sein, dessen Einträge der Kunde mit Hilfe des Endgerätes durchsuchen und abrufen kann. Solche Daten des Servers zur Erbringung des Telekommunikationsdienste können mit den Mitteln des Endgerätes, z.B. einer numerischen Tastatur und einem einfachen Display nur schwer eingerichtet werden. Deshalb werden diese Daten direkt an dem Server durch eigens geschultes Bedienpersonal modifiziert, das die Daten gemäß von Angaben modifiziert, die ein Benutzer des Endgerätes z.B. telefonisch angibt.

Aufgabe der Erfindung ist es, in einem Server gespeicherte Daten auf komfortable Weise zu modifizieren, mit denen der Server unter Zusammenwirkung mit einem Telekommunikations-Endgerät Telekommunikationsdienste erbringen kann.

Diese Aufgabe wird durch ein Verfahren gemäß der technischen Lehre des Anspruchs 1, sowie einen Server gemäß der technischen Lehre des Anspruchs 7 und ein Endgerät gemäß der technischen Lehre des Anspruchs 8 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, von einem Datenendgerät aus eine Datenverbindung zu einem Server aufzubauen, in dem Daten gespeichert sind, mit denen der Server unter Zusammenwirkung mit einem Telekommunikations-Endgerät Funktionen erbringen kann. Anschließend werden diese Daten an dem Datenendgerät interaktiv mit dem Server modifiziert. Danach wird die Datenverbindung wieder beendet und es können mit Hilfe der modifizierten Daten neue Funktionen erbracht werden oder bereits definierte Funktionen in modifizierter Form an dem Telekommunikations-Endgerät genutzt werden.

Vorteilhafterweise wird der Zugang zu den Daten des Servers streng kontrolliert, so daß nur ein zu einem solchen Zugang Berechtigter die Daten manipulieren kann. Die Datenverbindung wird entweder über ein On-line-Telekommunikationsnetz, z.B. das Internet, oder auch über ein Telekommunikationsnetz für Telefonie, z.B. ein ISDN-Telekommunikationsnetz (Integrated Services Digital Network) aufgebaut.

Im folgenden werden die Erfindung und ihre Vorteile anhand eines Ausführungsbeispiels unter Zuhilfenahme der Zeichnungen dargestellt.
- Figur 1: zeigt eine Anordnung zur Ausführung des erfindungsgemäßen Verfahrens mit einem erfindungsgemäßen Server (CS) und einem Datenendgerät (DT), die über eine Datenverbindung (CON) miteinander verbunden sind.
- Figur 2: zeigt die Anordnung zur Ausführung des erfindungsgemäßen Verfahrens aus Figur 1, zusätzlich jedoch noch ein On-Line-Datennetzwerk (ODN).

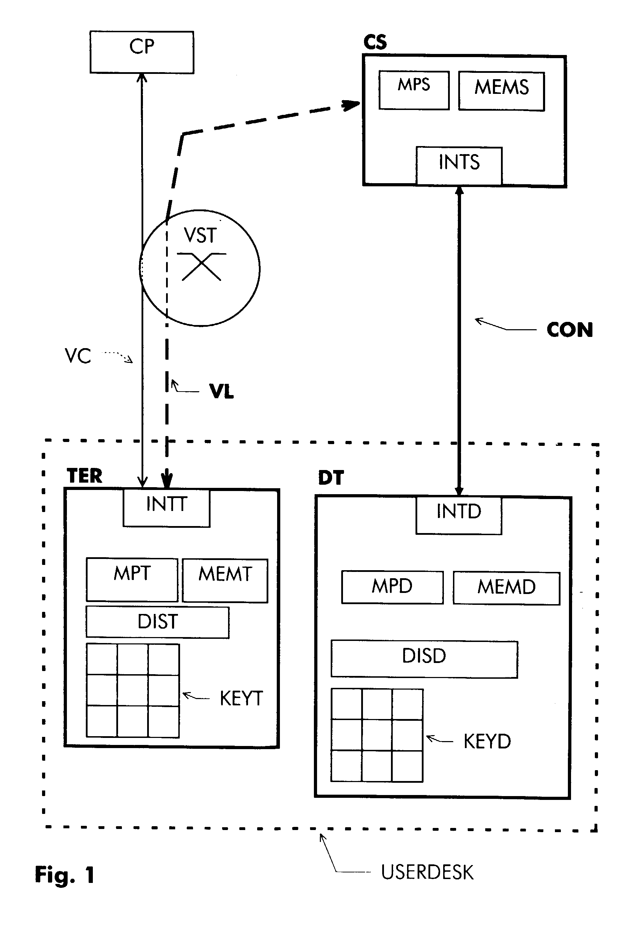

In Figur 1 ist eine beispielhafte Anordnung dargestellt, mit der die Erfindung ausgeführt werden kann. Eine Verbindung VL, die mit einer dicken gestrichelten Linie dargestellt ist, verbindet ein Endgerät TER mit einem Server CS. Das Endgerät TER enthält eine zentrale Steuereinheit MPT, die die Funktionen des Endgerätes TER steuert, eine Anzeigevorrichtung DIST, die zur Visualisierung von Informationen dient, ein Tastenfeld KEYT, mit dem das Endgerät TER bedient werden kann und einen Speicher MEMT, in dem Daten für Grundfunktionen und Daten für Sonderfunktionen abgelegt sind. Außerdem besitzt das Endgerät TER eine Schnittstelleneinrichtung INTT, die zum Aufbau von Telekommunikationsverbindungen dient. Die Komponenten des Endgerätes TER sind untereinander durch in Figur 1 nicht dargestellte Verbindungen verbunden.

Als symbolische Darstellung für ein Telekommunikationsnetz dient in Figur 1 eine Vermittlungsstelle VST. Das Telekommunikationsnetz kann jedoch auch aus weiteren Knotenpunkten und Verbindungsleitungen bestehen. Das Telekommunikationsnetz kann auch ein Mobilfunk-Telekommunikationsnetz sein und das Endgerät TER ein dafür geeignetes Endgerät.

Der Server CS steht beispielhaft für eine Datenbereitstellungseinrichtung, die Daten für das Endgerät TER zur Verfügung stellen kann. Es kann sich bei dem Server CS um einen einzelnen Rechner oder auch um ein Netzwerk aus mehreren Rechnern handeln. Von den Komponenten des Servers CS sind beispielhaft eine Steuervorrichtung MPS, ein Speicher MEMS und eine Schnittstelleneinrichtung INTS dargestellt. Bei der Steuervorrichtung MPS kann es sich z.B. um einen einzelnen Prozessor oder eine Gruppe von Prozessoren handeln, die in dem Speicher MEMS gespeicherte Befehlssequenzen ausführen. In dem Speicher MEMS sind zusätzlich Daten abgelegt, mit deren Hilfe in dem Endgerät TER Funktionen erbracht werden können. Der Server CS kann neben dem Endgerät TER auch weitere, in Figur 1 nicht dargestellte, mit dem Endgerät TER vergleichbare Endgeräte mit Daten versorgen.

Weiterhin ist in Figur 1 eine Verbindung VC dargestellt, die ebenfalls über die Vermittlungsstelle VST z.B. als ein B-Kanal einer ISDN-Verbindung geführt ist und das Endgerät TER mit einem Kommunikationspartner CP, z.B. einem weiteren Endgerät, verbindet. Das Endgerät TER verfügt über die Grundfunktionen eines Fernsprechapparates, wie z.B. Rufnummernwahl, Spracheingabe und Sprachausgabe. Die zur Spracheingabe und Sprachausgabe erforderlichen Mittel, Mikrophon und Lautsprecher sind im Interesse einer einfachen Darstellung in Figur 1 nicht gezeigt. Außerdem kann das Endgerät TER nach Laden von Daten weitere Sonderfunktionen anbieten, wie z.B. eine besondere Information auf der Anzeigevorrichtung DIST oder ein besonderes Layout derselben. Nachdem das Endgerät TER für Sonderfunktionen erforderliche Daten von dem Server CS empfangen hat, können die Sonderfunktionen sowohl unmittelbar nach dem Empfang durch die Steuereinheit MPT ausgeführt als auch für eine spätere Verwertung in dem Speicher MEMT gespeichert werden.

Auf der Verbindung VL kann das Endgerät TER mit dem Server CS Daten austauschen. Die Verbindung VL kann vor, nach und während einer Verbindung VC zu dem Kommunikationspartner CP bestehen und ist von der Verbindung VC zu dem Kommunikationspartner CP unabhängig. So kann das Endgerät TER jederzeit mit Daten von dem Server CS versorgt werden. Die Verbindung VL kann eine Sprachverbindung auf einer separaten Teilnehmeranschlußleitung sein oder die Verbindung VC und die Verbindung VL nutzen gemeinsam eine Teilnehmeranschlußleitung auf je einem Kanal. Der Kanal für die Verbindung VL kann z.B. ein Organisationskanal eines Mobilfunk-Telekommunikationsnetzes sein, ein D-Kanal auf einer ISDN-Teilnehmeranschlußleitung oder ein In-Band-Signalisierungskanal, der von dem für die Verbindung VC genutzten Kanal unabhängig ist. Die Verbindung VL kann auch als eine virtuelle, paketorientierte Datenverbindung eingerichtet sein.

Weiter zeigt Figur 1 ein Datenendgerät DT, das über eine Schnittstelleneinrichtung INTD eine Datenverbindung CON mit dem Server CS über dessen Schnittstelleneinrichtung INTS unterhält. Die Datenverbindung CON kann als eine Telefonverbindung, z.B. als eine Datex-P-Verbindung oder eine D-Kanal-Verbindung eines ISDN-Telekommunikationsnetzes aufgebaut werden. Oder die Datenverbindung CON ist eine Verbindung über ein On-Line-Datennetzwerk, z.B. über das Internet. Auf die verschiedenen Möglichkeiten zum Aufbau der Datenverbindung CON wird später noch eingegangen. Das Datenendgerät DT enthält eine Steuervorrichtung MPD, z.B. einen Prozessor, einen Speicher MEMD, in der unter anderem für die Steuervorrichtung MPD ausführbare Programme gespeichert sind. Weiterhin besitzt das Datenendgerät DT eine Anzeigevorrichtung DISD, z.B. einen Bildschirm oder eine LCD-Anzeige (Liquid Crystal Display), und als eine Eingabevorrichtung ein Tastenfeld KEYD. Die Komponenten des Datenendgerätes DT sind untereinander durch in Figur 1 nicht dargestellte Verbindungen verbunden. Das Datenendgerät DT kann zusätzlich auch eine Maus als weitere Eingabevorrichtung aufweisen, so daß im Zusammenwirken mit dem Tastenfeld KEYD und der Anzeigevorrichtung DISD eine GUI-Bedienerführung (Graphical User Interface) an dem Datenendgerät DT möglich wird. Als Datenendgerät DT kann z.B. ein Personal Computer eingesetzt werden.

Nachdem das Datenendgerät DT die Datenverbindung CON zu dem Server CS aufgebaut hat, sendet das Datenendgerät DT an den Server CS einen Zugangswunsch zu den Dienstleistungs-Daten, mit denen der Server CS die Dienstleistungsfunktionen für das Endgerät TER erbringen kann. Als Zugangswunsch kann z.B. die Teilnehmernummer gesendet werden, die dem Teilnehmeranschluß des Endgerätes TER zugeordnet ist.

Vorteilhafterweise prüft der Server CS den Zugangswunsch und stellt dabei fest, ob er den Zugang zu den Dienstleistungs-Daten des Teilnehmeranschlusses gewähren kann. Z.B. kann in Verbindung mit dem Zugangswunsch eine persönliche Identifikationsnummer, eine sogenannte _{"}Personal Identification Number" (PIN), von dem Datenendgerät DT an den Server CS gesendet werden. Nur wenn die an dem Datenendgerät DT eingegebene PIN mit einer von dem Server CS im Zusammenhang mit dem Zugangswunsch erwarteten PIN übereinstimmt, erlaubt der Server CS den Zugriff zu den Dienstleistungs-Daten. So ist sichergestellt, daß nur ein dazu berechtigter Teilnehmer oder Vertreter des Teilnehmers auf die Dienstleistungs-Daten zugreifen können. Es kann aber auch vorbestimmt sein, daß allein schon die Angabe der Teilnehmernummer des Teilnehmeranschlusses genügt, um einen Zugang zu den Dienstleistungs-Daten zu erhalten. Die letztere Variante kann z.B. dann gewählt werden, wenn die Dienstleistungs-Daten nur gelesen, aber nicht geändert werden sollen oder wenn die Dienstleistungs-Daten ohnehin nur in einem sehr eingeschränktem Maße modifizierbar sind.

Ist der Zugang zu den Dienstleistungs-Daten nicht gewährbar, meldet dies der Server CS an das Datenendgerät DT. Dann kann entweder an dem Datenendgerät DT ein erneuter Zugang mit einer geänderten Zugangskennung, z.B. mit einer anderen PIN, versucht werden, oder die Verbindung des Servers CS mit dem Datenendgerät DT wird abgebaut.

Wenn der Teilnehmer mit dem Datenendgerät DT Zugang zu seinen Dienstleistungs-Daten erhalten hat, bearbeiten der Server CS und das Datenendgerät DT die Dienstleistungs-Daten interaktiv. Dabei sendet der Server CS Dienstleistungs-Daten an das Datenendgerät DT, das diese Daten dann auf einem Ausgabemedium, z.B. auf der Anzeigevorrichtung DIST oder einem in Figur 1 nicht dargestellten Lautsprecher ausgeben kann. Werden an dem Datenendgerät DT die ausgegebenen Daten mit Hilfe eines Eingabemediums, z.B. des Tastenfeldes KEYD, modifiziert, sendet das Datenendgerät DT die geänderten Daten an den Server CS. Der Server CS speichert die geänderten Daten in seinem Speicher MEMS. Es liegt aber auch im Rahmen der Erfindung, daß die Daten von dem Datenendgerät DT nur gelesen werden und nicht geändert werden.

Über eine Veränderung der Dienstleistungs-Daten können Einstellungen von Dienstfunktionen verändert werden, die der Server CS für das Endgerät TER erbringt. Dabei werden z.B. zusätzliche Dienstfunktionen angefordert oder bei bereits gebuchten Dienstfunktionen die Betriebsparameter verändert. Eine Dienstfunktion des Servers CS kann z.B. sein, daß er zu einer von dem Endgerät TER auf der Verbindung VC im Rahmen einer CLI-Nachricht (Calling Line Identification) empfangenen Rufnummer eines Anrufers dessen Namen ermittelt. Das Endgerät TER leitet die CLI-Nachricht über die Verbindung VL an den Server CS weiter, der dann auf der Verbindung VL dem Endgerät TER den ermittelten Namen des Anrufers zur Anzeige auf der Anzeigevorrichtung DIST zurücksendet. Mit Hilfe des Datenendgerätes DT kann diese Dienstfunktion für das Endgerät TER eingerichtet werden.

Zur Veranschaulichung des Zusammenwirkens von dem Server CS mit dem Endgerät TER ist im folgenden eine weitere Dienstfunktion beschrieben. Mit Hilfe der Daten des Servers CS kann das Endgerät TER abhängig von vorangegangenen Bedienschritten eines Bedieners die Belegung der Tasten des Tastenfeldes KEYT mit Funktionen verändern, die mit einem Druck auf einzelne Tasten am Endgerät TER jeweils abgerufen werden können. Die aktuelle Belegung der Tasten mit Funktionen wird dann z.B. durch Anzeige von Symbolen oder Texten auf der Anzeigevorrichtung DIST sichtbar gemacht. Bei einem Tastendruck auf das Tastenfeld KEYT sendet das Endgerät TER eine dem Tastendruck entsprechende Nachricht an den Server CS, der seinerseits mit Daten zur Erbringung von Dienstfunktionen antwortet. Diese Daten können z.B. Befehlssequenzen enthalten, die aus dem Speicher MEMS in den Speicher MEMT geladen werden und anschließend von der Steuervorrichtung MPT ausgeführt werden. In den Befehlssequenzen kann dann eine bestimmte Art und Gestaltung der Anzeige in der Anzeigevorrichtung DIST vorgegeben werden. Dem Bediener steht damit eine Menüführung zur Verfügung, die mit den Daten des Servers CS an die aktuelle Situation angepaßt wird. Dem Bediener werden so die Funktionen des Endgerätes TER durch das Zusammenwirken von dem Server CS und dem Endgerät TER angeboten. Auch eine solche Dienstfunktion kann ebenso wie andere, hier nicht genannte Dienstfunktionen bei dem Server CS über das Datenendgerät DT gebucht werden.

Wenn eine Dienstfunktion bereits gebucht ist, können von dem Datenendgerät DT aus die Betriebsparameter für diese Dienstfunktion an aktuelle Bedürfnisse angepaßt werden. Für die obengenannte Umsetzung einer CLI-Nachricht in eine Nachricht mit dem Namen des Anrufers wird der Server CS üblicherweise den Namen des Anrufers aus einem allgemein zugänglichen Telefonbuch ermitteln. Es kann aber z.B. auch gewünscht sein, daß an dem Endgerät TER ein Anrufer nicht mit seinem _{"}amtlichen" Namen, sondern mit seinem Kosenamen oder mit seiner Stellung innerhalb einer Familie angezeigt wird. Dann kann über das Datenendgerät DT in dem Server CS festgelegt werden, daß bei einem Anruf eines Freundes _{"}Frank" statt _{"}F. Mustermann" und bei einem Anruf der Mutter _{"}Mutter" statt beispielsweise _{"}Anna Schmidt" in der Anzeigevorrichtung DIST angezeigt wird.

In dem Speicher MEMS des Servers CS kann aber auch ein kundenspezifisches Telefonbuch abgelegt sein, dessen Einträge von dem Endgerät TER aus durchsucht und abgerufen werden können. Im Interesse einer besseren zentralen Wartung oder wegen mangelnder Kapazität des Speichers MEMT ist ein solches Telefonbuch nicht in dem Endgerät TER, sondern in dem Server CS gespeichert. Mit Hilfe des Datenendgerätes DT, insbesondere mit der erwähnten GUI-Bedienerführung kann ein solches Telefonbuch leicht und komfortabel modifiziert werden, z.B. um neue Einträge ergänzt werden.

Vorteilhafterweise sendet das Datenendgerät DT nur zulässig geänderte Daten an der Server CS, indem das Datenendgerät DT vor dem Senden prüft, ob die Datenänderung zulässig ist. Der Server CS seinerseits kann ebenfalls die ihm gesendeten Daten auf Plausibilität prüfen und nur solche Daten in den Speicher MEMS einspeichern, die der Plausibilitätsprüfung standhalten. Größtmögliche Sicherheit wird jedoch erreicht, wenn sowohl der Server CS als auch das Datenendgerät DT eine Datenprüfung vornehmen.

Nachdem die Datenänderungen oder auch nur eine Dateneinsicht erfolgreich vorgenommen wurde, beendet das Datenendgerät DT die Datenverbindung CON mit dem Server CS. Die Datenverbindung CON kann jedoch auch von dem Server CS seinerseits abgebaut werden, z.B. wenn an dem Datenendgerät DT über längere Zeit keine Eingabe erfolgt, so daß Verbindungskapazität des Servers CS durch die ungenutzte Verbindung zu dem Datenendgerät DT unnötig lange blockiert wird und deshalb eine Zeitüberwachung in dem Server CS den Verbindungsabbau veranlaßt.

Sämtliche Kommunikation über die Datenverbindung CON zwischen dem Datenendgerät DT und dem Server CS, insbesondere diejenige Kommunikation im Zusammenhang mit dem Zugangswunsch und der dazugehörigen Berechtigungsprüfung, kann mit Hilfe von Verschlüsselungsmechanismen zum Schutz gegen unberechtigtes Mithören und Manipulieren durch Fremde geschützt werden.

Bei der interaktiven Bearbeitung der Dienstleistungs-Daten kann der Server CS im bisher genannten lediglich Dienstleistungs-Daten als solche an das Datenendgerät DT senden, die dann durch das Datenendgerät DT interpretiert und für einen Bediener des Datenendgerätes DT in einem Bildschirmmenü dargestellt werden. In umgekehrter Richtung sendet dann das Datenendgerät DT nur die bereits erwähnte Zugangskennung und PIN, Anforderungen für Dienstleistungs-Daten, Bedienereingaben oder modifizierte Dienstleistungs-Daten an den Server CS. Für die Interpretation empfangener Dienstleistungs-Daten, die Darstellung in Bildschirmmenüs und gegebenenfalls für die Prüfung an dem Datenendgerät DT eingegebener Daten sorgt in diesem Fall das Datenendgerät DT mit Hilfe einer in dem Speicher MEMD dauerhaft installierten und von dort abrufbaren Software. Eine solche Software kann aber auch jeweils vor einer Bearbeitung der Dienstleistungs-Daten von dem Speicher MEMS des Servers CS in den Speicher MEMD des Datenendgerätes DT geladen werden.

In einer weiteren Variante der Erfindung ist es auch möglich, daß der Server CS und das Datenendgerät DT mit zusätzlichen Interpretationshinweisen angereicherte Dienstleistungs-Daten austauschen. Dann sendet der Server CS die Dienstleistungs-Daten z.B. zusammen mit einer zusätzlichen Anweisung zum Bildschirmaufbau oder einer zusätzlichen Anweisung zur akustischen Ausgabe der Daten an das Datenendgerät DT. So wird die Form der Ausgabe an dem Datenendgerät DT unmittelbar von dem Server CS gesteuert und sowohl Änderungen als auch Erweiterungen der Ausgabeform können zentral von dem Server CS ausgehen und sind nicht mehr abhängig von einer auf einem Speichermedium des Datenendgerätes DT fest installierten Software. Das Datenendgerät DT verfügt dann lediglich über Auswertemittel, um die von dem Server CS gesendeten Anweisungen zu interpretieren.

Insbesondere wenn die Datenverbindung CON über das Internet führt, kann für den letztgenannten Austausch von erweiterten Daten zwischen dem Server CS und dem Datenendgerät DT die Beschreibungssprache Hyper Text Markup Language (HTML) verwendet werden. Der Server CS sendet dann an das Datenendgerät DT sogenannte HTML-Dokumente, die aus einer Folge von ASCII-Zeichen bestehen (American Standard Code for Information Interchange) und von dem Datenendgerät DT mittels eines speziellen Auswerteprogrammes, eines sogenannten Browsers gelesen und interpretiert werden. Die Syntax der HTML-Dokumente ist genau festgelegt und erlaubt es, z.B. die Art der schriftlichen Darstellungen von Bildschirmseiten oder auch ganze akustische Sequenzen mit der HTML-Beschreibungssprache zu beschreiben. Das Datenendgerät DT kann auf Eingabefeldern einer Bildschirmseite empfangene Dienstleistungs-Daten editieren, so daß der Bediener des Datenendgerätes DT die angezeigten Daten modifizieren und das Datenendgerät DT die geänderten Daten an den Server CS zurücksenden kann.

Als Weiterentwicklung der Beschreibungsmöglichkeiten von Informationen mit HTML-Dokumenten bietet die Sprache JAVA erweiterte Möglichkeiten für die Ausgabe von Daten und insbesondere für deren interaktive Modifikation. Bei Verwendung von JAVA versendet der Server CS einen aus einem compilierten Quelltext erzeugten Zwischencode, ein sogenanntes JAVA-Applet an das Datenendgerät DT, das dieses mit einem JAVA-lnterpreter in Maschinencode übersetzt und anschließend das so erzeugte Maschinencode-Programm ausführt, d.h. Bildsequenzen, Akustiksequenzen oder Eingabemasken für Dienstleistungs-Daten erzeugt. Da in die JAVA-Applets auch Kommunikationsmittel der Internetprotokoll-Familie TCP/IP (Transmission Control Protocol/Internet Protocol) integriert werden können, wird die Rücksendung von modifizierten oder unmodifizierten Dienstleistungs-Daten oder auch von Steuerkommandos von dem Datenendgerät DT an den Server CS wesentlich erleichtert.

Weiterhin kann der Server CS über das Datenendgerät DT dazu angewiesen werden, ausführbare Programme oder Programmbausteine, z.B. sogenannte Makros, zu erzeugen und über die Verbindung VL in das Endgerät TER zu laden. Das Endgerät TER speichert diese Programme in seinem Speicher MEMT ab und kann die Programme jederzeit zur Bereitstellung von Funktionen aus seinem Speicher MEMT abrufen und in der Steuereinheit MPT ausführen. Da von dem Endgerät TER die Verbindung VL zu dem Server CS jedoch parallel zu der Verbindung VC zu dem Kommunikationspartner CP bestehen kann, kann das Endgerät TER gleichzeitig Daten für Dienstfunktionen von dem Server CS laden und eine Kommunikation mit dem Kommunikationspartner CP anbieten. Das Endgerät TER bleibt so auch während eines Download-Vorgangs auf der Verbindung VC erreichbar.

Der Server CS kann dem Datenendgerät DT Programme oder Programmbausteine z.B. in Form von Symbolen, sogenannten Icons, auf der bereits erwähnten GUI-Bedienoberfläche zur Auswahl durch einen Bediener des Datenendgerätes DT anbieten. Der Bediener legt dann fest, welche Programme oder Programmbausteine einzeln oder in Kombination miteinander von dem Server CS in das Endgerät TER zum temporären Gebrauch oder zur dauerhaften Speicherung in dem Speicher MEMT geladen werden.

Das Endgerät TER und das Datenendgerät DT können sich an unterschiedlichen Orten befinden. Damit ist möglich, von einem beliebigen Ort aus mit dem Datenendgerät DT eine Datenverbindung CON zu dem Server CS aufzubauen und dort gespeicherte Dienstleistungs-Daten zu modifizieren. Durch einen strichpunktierten Kasten USERDESK ist jedoch in Figur 1 angedeutet, daß das Datenendgerät DT und das Endgerät TER in dem Beispiel in Figur 1 gemeinsam an einem Ort aufgestellt sind.

Es ist auch möglich, daß das Endgerät TER ein Kombinationsgerät ist, das die Funktionen des Endgerätes TER leisten kann und weiterhin die bereits beschriebenen Funktionen des Datenendgerätes DT in Verbindung mit dem Server CS erbringen kann. Dieses Kombinationsgerät kann dann z.B. über die Verbindung VC die Funktionen eines Telefonapparates leisten, über die Verbindung VL Daten für Komfortfunktionen laden und darüber hinaus zusätzlich über die Datenverbindung CON mit dem Server CS zur Datenmanipulation kommunizieren. Die Steuereinheit MPT erfüllt dann zusätzlich die Funktionen der Steuereinheit MPD, die Anzeigevorrichtung DIST zusätzlich die Funktionen der Anzeigevorrichtung DISD, das Tastenfeld KEYT zusätzlich die Funktionen des Tastenfeldes KEYD, der Speicher MEMT zusätzlich die Funktionen des Speichers MEMD und die Schnittstelleneinrichtung INTT zusätzlich die Funktionen der Schnittstelleneinrichtung INTD. Das Kombinationsgerät kann z.B. ein Komfort-Telefon wie das Endgerät TER sein, das auch für eine erfindungsgemäße Kommunikation mit dem Server CS zur Datenmanipulation geeignet ist. Auch ein Personal Computer kann mit Eingabemitteln und Ausgabemitteln, z.B. Mikrofon und Lautsprecher, und einer für eine komfortable Telefonie in Form des Endgerätes TER geeignete Software ausgerüstet werden und zusätzlich eine Datenmanipulation in einer Weise wie das Datenendgerät DT ermöglichen.

Das Kombinationsgerät kann die Datenverbindung CON und die Verbindung VL nacheinander oder gleichzeitig auf einem gemeinsamen Kanal, z.B. dem eingangs erwähnten D-Kanal, unterhalten oder jeweils auf eigenen, getrennten Kanälen, z.B. einem B-Kanal und einem D-Kanal einer ISDN-Teilnehmeranschlußleitung. Bei beiden genannten Alternativen kann das Kombinationsgerät parallel zu einer Datenmodifikation zusammen mit dem Server CS auch mit dem Kommunikationspartner CP kommunizieren. Es ist jedoch auch möglich, daß das Kombinationsgerät während einer solchen Datenmodifikation nicht für den Kommunikationspartner CP erreichbar ist, weil z.B. für die Datenverbindung CON ein B-Kanal benutzt wird und kein weiterer B-Kanal zu dem Kombinationsgerät mehr für den Kommunikationspartner CP verfügbar ist.

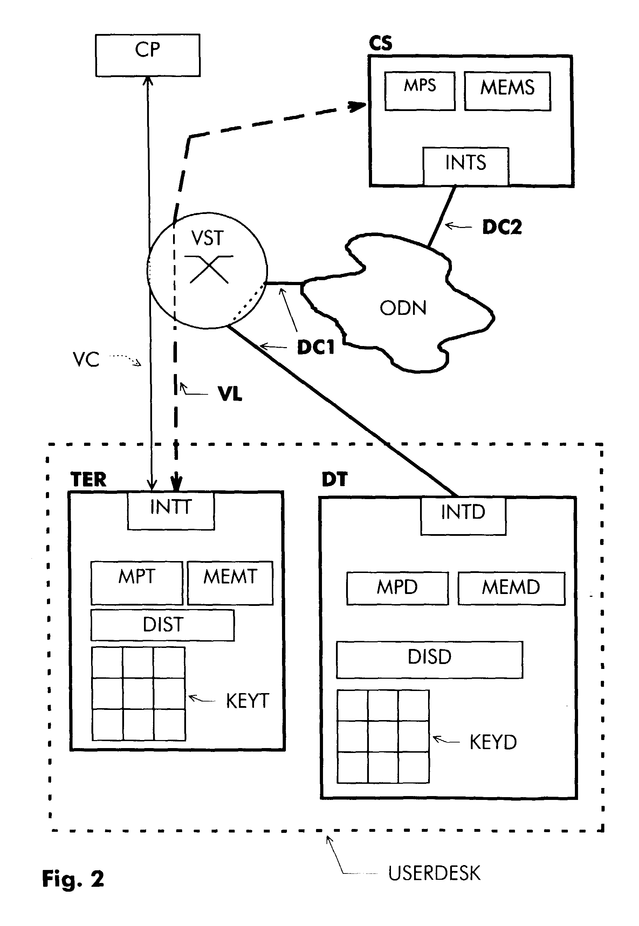

Eine Möglichkeit, eine Datenverbindung dem Server CS über ein On-Line-Datennetzwerk zu aufzubauen, ist in Figur 2 dargestellt, die im wesentlichen die aus Figur 1 bekannten Elemente enthält. Zusätzlich jedoch zeigt Figur 2 ein On-Line-Datennetzwerk ODN, z.B. das Internet. Wenn das Datenendgerät DT zusammen mit dem Endgerät TER eine gemeinsame Teilnehmeranschlußleitung nutzt, kann das Datenendgerät DT über die Vermittlungsstelle VST und weitere, in Figur 2 nicht dargestellte Einrichtungen eines Telekommunikationsnetzes eine Verbindung DC1 zu dem On-Line-Datennetzwerk ODN aufbauen. Die Verbindung DC1 ist in Figur 2 eine Telefonverbindung zu einem in Figur 2 nicht dargestellten Zugangsrechner des On-Line-Datennetzwerkes ODN, der als Schnittstelle zwischen dem Telekommunikationsnetz und dem On-Line-Datennetzwerk ODN dient. Das Datenendgerät DT kann dann Daten z.B. über ein Modem oder eine ISDN-Schnittstellenkarte auf der Verbindung DC1 mit dem On-Line-Datennetzwerk ODN austauschen. Ein Modem wird eingesetzt, wenn die Verbindung DC1 nur analoge Übertragung zuläßt, eine ISDN-Schnittstellenkarte, wenn die Verbindung DC1 die Übertragung von digitalen ISDN-Datenpaketen erlaubt. Wenn das On-Line-Datennetzwerk ODN das Internet ist, ist der Aufbau der Verbindung DC1 mit einem Datenendgerät DT in Form eines Personal Computers und einer geeigneten Schnittstellensoftware allgemein bekannt. Einrichtungen innerhalb des On-Line-Datennetzwerkes ODN, insbesondere in Figur 2 nicht dargestellte Server und Router bauen dann die weitere Verbindung zu dem Server CS einschließlich der Verbindung DC2 zwischen On-Line-Datennetzwerk ODN und dem Server CS auf. Gerade dann, wenn das On-Line-Datennetzwerk ODN das Internet ist, ist der Verbindungsaufbau zwischen dem Datenendgerät DT und dem Server CS sehr einfach zu bewältigen. Dem Server CS wird eine sogenannte URL-Adresse (Uniform Resource Locator) zugewiesen, die dann zum Verbindungsaufbau lediglich an dem Datenendgerät DT angegeben werden muß. Mit dieser URL-Adresse ist es im Internet möglich, von dem erwähnten Zugangsrechner ausgehend das Datenendgerät DT über die Schnittstelleneinrichtung INTS mit einer Eingangsschnittstelle, einer sogenannten Homepage, des Servers CS zu verbinden. Diese Homepage ist dann z.B. in der erwähnten HTML-Sprache verfaßt und erlaubt die Manipulation von Dienstleistungs-Daten.

In einer weiteren Konstellation, die jedoch nicht durch eine Figur veranschaulicht ist, kann der Server CS in eine Verbindung zwischen der Vermittlungsstelle VST und dem Endgerät TER eingeschleift sein. Diese Verbindung kann z.B. ein D-Kanal einer Teilnehmeranschlußleitung sein, der über den Server CS geführt ist. Wie auf der Verbindung VL kann der Server CS auch auf dieser über ihn geführten Verbindung Daten einspeisen oder manipulieren und so die Funktionen des Endgerätes TER beeinflussen.

## Patentansprüche

1. Verfahren zur Modifikation von in einem Server (CS) gespeicherten Dienstleistungs-Daten, mit denen durch den Server (CS) Dienstleistungsfunktionen für ein Telekommunikations-Endgerät (TER) eines Teilnehmers über einen Dienstkanal (VL) erbringbar sind, mit den Schritten:
- ein Datenendgerät (DT) baut eine Datenverbindung (CON) zu dem Server (CS) auf,
- das Datenendgerät (DT) sendet einen Zugangswunsch zu den Dienstleistungs-Daten an den Server (CS),
- der Server (CS) empfängt den Zugangswunsch,
- der Server (CS) und das Datenendgerät (DT) bearbeiten die Daten durch Interaktion, bei der der Server (CS) die Daten an das Datenendgerät (DT) ausgibt und das Datenendgerät (DT) Daten zumindest dann an den Server (CS) sendet, wenn an dem Datenendgerät (DT) eine Datenänderung vorgegeben wurde,
- der Server (CS) speichert geänderte Daten,
- der Server (CS) und das Datenendgerät (DT) beenden die Datenverbindung.

2. Verfahren nach Anspruch 1, dadurch gekennzeichnet, daß vor dem Bearbeiten der Daten der Zugangswunsch überprüft und festgestellt wird, ob der Teilnehmer eine Zugangsberechtigung zu den Daten besitzt.

3. Verfahren nach Anspruch 1, dadurch gekennzeichnet, daß der Server (CS) zusätzlich an das Datenendgerät (DT) von dem Datenendgerät (DT) interpretierbare Instruktionen zur Ausgabe und Bearbeitung der Dienstleistungs-Daten sendet.

4. Verfahren nach Anspruch 1, dadurch gekennzeichnet, daß die Datenverbindung (CON) auf einem On-Line-Datennetzwerk aufgebaut wird.

5. Verfahren nach Anspruch 4, dadurch gekennzeichnet, daß die Datenverbindung (CON) auf dem Internet aufgebaut wird.

6. Verfahren nach Anspruch 1, dadurch gekennzeichnet, daß die Datenverbindung (CON) auf einem ISDN-Telekommunikationsnetz aufgebaut wird.

7. Server (CS), in dem Dienstleistungs-Daten gespeichert sind, mit denen durch den Server Dienstleistungsfunktionen für ein Telekommunikations-Endgerät (TER) über einen Dienstkanal (VL) erbringbar sind, **dadurch gekennzeichnet, daß** der Server (CS) Kommunikationsmittel aufweist, die so ausgestaltet sind, daß der Server über eine Datenverbindung (CON) mit einem Datenendgerät (DT) eines Teilnehmers verbunden werden kann, daß der Server Empfangsmittel aufweist, die so ausgestaltet sind, daß der Server einen von dem Datenendgerät gesendeten Zugangswunsch des Teilnehmers zu den Dienstleistungs-Daten empfangen kann, daß der Server Ausgabemittel aufweist, die so ausgestaltet sind, daß der Server Daten an das Datenendgerät ausgeben kann, daß der Server Datenempfangsmittel aufweist, die so ausgestaltet sind, daß der Server Daten von dem Datenendgerät empfangen kann, und daß der Server Speichermittel aufweist, die so ausgestaltet sind, daß der Server Daten zumindest dann speichern oder gespeicherte Daten ändern kann, wenn an dem Datenendgerät eine Datenänderung vorgegeben wurde.

8. Endgerät (TER) für ein Telekommunikationsnetz mit Einrichtungen zum Bereitstellen von Funktionen an dem Endgerät (TER), das die Funktionen mit Hilfe von Dienstleistungs-Daten erbringen kann, die das Endgerät (TER) von einem Server (CS) empfängt, **dadurch gekennzeichnet, daß** das Endgerät Kommunikationsmittel aufweist, die so ausgestaltet sind, daß das Endgerät eine Datenverbindung zu dem Server aufbauen kann, daß das Endgerät Sendemittel aufweist, die so ausgestaltet sind, daß das Endgerät einen Zugangswunsch zu den Dienstleistungs-Daten an den Server senden kann, daß das Endgerät Bearbeitungsmittel aufweist, die so ausgestaltet sind, daß das Endgerät und der Server die Dienstleistungs-Daten durch Interaktion bearbeiten können, bei der der Server die Dienstleistungs-Daten an das Endgerät ausgibt und das Endgerät (TER) Dienstleistungs-Daten zumindest dann an den Server sendet, wenn an dem Endgerät eine Datenänderung vorgegeben wurde und daß das Endgerät Mittel aufweist, die ausgestaltet sind, daß das Endgerät die Datenverbindung beenden kann.

9. Endgerät nach Anspruch 8, dadurch gekennzeichnet, daß die Kommunikationsmittel so ausgestaltet sind, daß das Endgerät (TER) die Datenverbindung und die Verbindung (VL) auf einem gemeinsamen Kanal aufbauen kann.
